# EUROPEAN PATENT APPLICATION

(11) **EP 2 072 817 A1**
(43) Date of publication of application: **24.06.2009**
(21) Application number: 07822965.5
(22) Date of filing: 04.10.2007
(51) Int. Cl.: F03G 6/00, F24J 2/00, F03H 5/00

(54) **REACTION SOLAR TURBINE**

(30) Priority: 10.10.2006 ES 200602605; 01.10.2007 ES 200702556
(71) Applicant: Barbero Ferrandiz, José Antonio, 41807 Espartinas Sevilla (ES)
(72) Inventor: Barbero Ferrandiz, José Antonio, 41807 Espartinas Sevilla (ES)
(74) Representative: Gil-Vega, Victor
(86) International application number: PCT/ES2007/000558
(87) International publication number: WO 2008/043867

(57) **Abstract**

The invention relates to an installation for obtaining mechanical energy from solar thermal energy, combining a conventional solar thermal installation connected to heat exchangers housed inside an externally-insulated vertical shell having an upwardly decreasing cross-section, in which an ascending air flow is generated in order to move a turbine housed at the upper end of the shell. In order to make better use of the wind at the installation a retractable orientable screen can also be installed at the point of the nozzle at which the external air current enters the shell, said screen being automatically oriented, by means of sensors, so as to maximise the flow of air entering the system using the natural currents.

## Description

### BACKGROUND TO THE STATE OF THE TECHNOLOGY

The afore-mentioned principal patent, which consists of the basis whose essence develops and substantially improves the present addition.

The objective of the present invention is to improve this turbine, and is expressed in the following paragraphs.

### EXPLANATION OF THE INVENTION

As an explanation of the invention, the present addition consists of an identical installation for obtaining mechanical energy from solar thermal energy by means of the combination of a conventional solar thermal installation connected to heat exchangers, housed inside an externally insulated vertical shell with an upwardly decreasing cross section in which an ascending air flow is generated, which causes the movement of a turbine located in the upper end of the shell.

Thus, the proposed exchangers will be heated by means of the circulation of the heat carrying fluid in counter current to the air flow that is introduced in the lower part of the shell, or alternatively by an axial compressor.

Obviously, the heat exchangers are fed by solar thermal panels, optimally arranged, based on the desired power and provided with an accumulator and a mixer to maintain the fluid that circulates around the exchangers at a constant temperature and which also allows a constant movement in the turbine.
In the described installation the movement of the turbine will generate the movement of the compressor, when available, and in any case will produce mechanical and even electrical energy if required for any application.

Finally, in those situations in which the solar thermal energy or that retained in the accumulator was not sufficient to maintain the desired temperature in the primary circuit, it can be complemented with a conventional boiler, that guarantees the optimal operation of the assembly.

Also, the present addition incorporates an improvement to the main patent for a better use of the wind in the installation area. This improvement consists of an orientable and retractable screen that can be installed in the area of the nozzle at which the external air current enters the shell. Through the use of sensors, this screen is automatically oriented to maximise the flow of air entering the system using the natural currents.

### DESCRIPTION OF THE FIGURES

Diagrammatic representations of the invention "Reaction solar turbine" are given in the following figures:
➢ Figure (1): Main view of the shell or external structure of the turbine.
➢ Figure (2): Main view of the central support structure.
➢ Figure (3): Main view of the rotor housed inside the shell
➢ Figure (4): Main diagram of the heat exchanger and the nebulizer ring.
➢ Figure (5): Main view of the cross section of the complete turbine.
➢ Figure (6): Diagram of operation of the assembly.

In these figures, the elements are numbered as follows:
(1): Intake nozzle.
(2): Housing or enclosure of the turbine motor.
(3): Axial compressor of the rotor.
(4): Lower support band.
(5): Column for support and housing of the rotor shaft.
(6): Trunk of the flow baffle cone.
(7): Laminar baffles, with functions of centring of the support column.
(8): Lower friction ring.
(9): Upper friction and anti-vibration ring.
(10): Central upper closing plate.
(11): Cylindrical section vanes.
(12): Exterior surface of the turbine housing.
(13): Interior surface of the turbine housing.
(14): Shaft support.
(15): Exterior friction ring.
(16): Interior friction ring.
(17): Main shaft.
(18): Shaft coupling plate for the user.
(19): Heat collector of the exchanger.
(20): Coils of the exchanger.
(21): Cold collector of the exchanger.
(22): Complete motor.
(23): Solar thermal panels.
(24): Circulation pump.
(25): Cold return accumulator.
(26): Excess heat accumulator.
(27): Start-up and emergency boiler.
(28): Heat insulation of the shell.
(29): Entry flow deflector.
(30): Shell support legs.
(31): User coupling plate.
(32): Water nebulizer ring.

### EXAMPLE OF PREFERRED IMPLEMENTATION

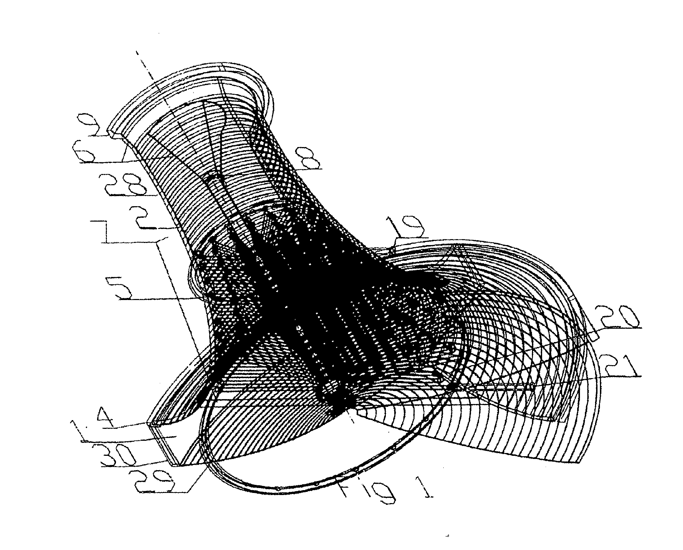

The operation of the installation as a whole is described clearly in the document of the main patent, whereas the view of Figure 1, that is now added, can be seen as an example of preferred implementation of the "Reaction Solar Turbine" which is carried out from a shell composed of an intake nozzle (1) located in the lower end of the assembly limited by a flow baffle and the general housing or enclosure of the turbine (2).

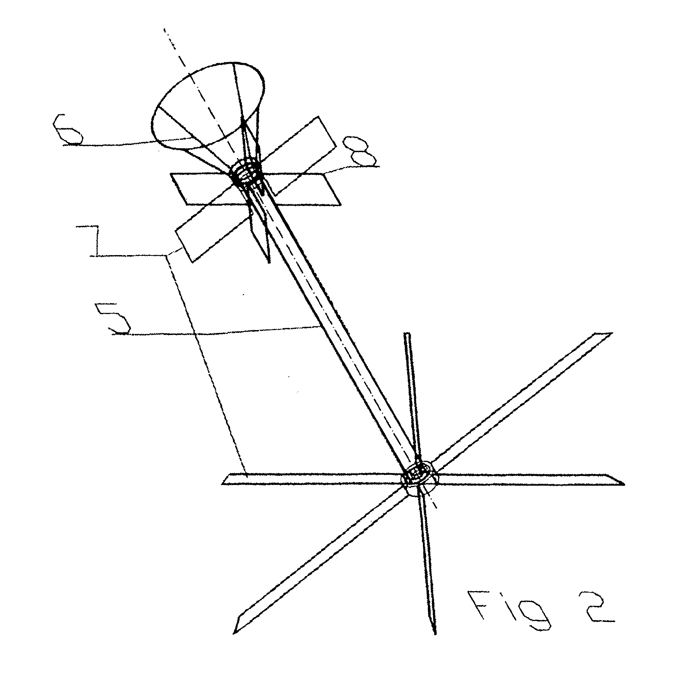

After compression by means of an axial compressor (3) housed in the lower end of the rotor as is shown in Figure 2, it is conducted upwards crossing the heat exchangers and the nebulizer ring Figure (3).

The shell reduces its diameter to accelerate the flow.

A tube (5) runs from the base of the shell, located at the height of the ring (4), to its upper part where the shell takes the form of a trunk of a cone (6) of increasing diameter so that, along with the general enclosure of the motor (2), an additional acceleration in the air flow is generated that moves towards the upper end of the assembly where a reaction turbine is located (10) as in Figure 2, by which the torque output is obtained.

The whole shell and turbine assembly is supported by a lower band (4) with its corresponding elevation supports over the surface of the ground.

Evidently, it is necessary to guarantee the solidity of the assembly, tube (5), cone (6) and lower part of the general housing (2) through laminar baffles (7). Whereas between the upper end of the tube (5) and the interior surface of the cone trunk (6) a friction ring is located (8), which can be provided with the respective bearings.

Finally, the upper and exterior end of the general body of the shell ends in a ring (9) that prevents the rocking of the rotor.

The external surface of the shell (2) has heat insulation that will reduce heat losses from the assembly.

The reaction turbine (10) can be seen In Figure 2), formed by the vanes (11), the exterior enclosure surface (12), the upper (14) and lower (13) enclosure surface and supported by the exterior (15) and interior (16) friction rings.

Also observed in Figure 2 is the shaft (17) that unites the whole motor assembly and transmits the movement and the force generated in the turbine to the axial compressor (3) and to the user coupling (18).

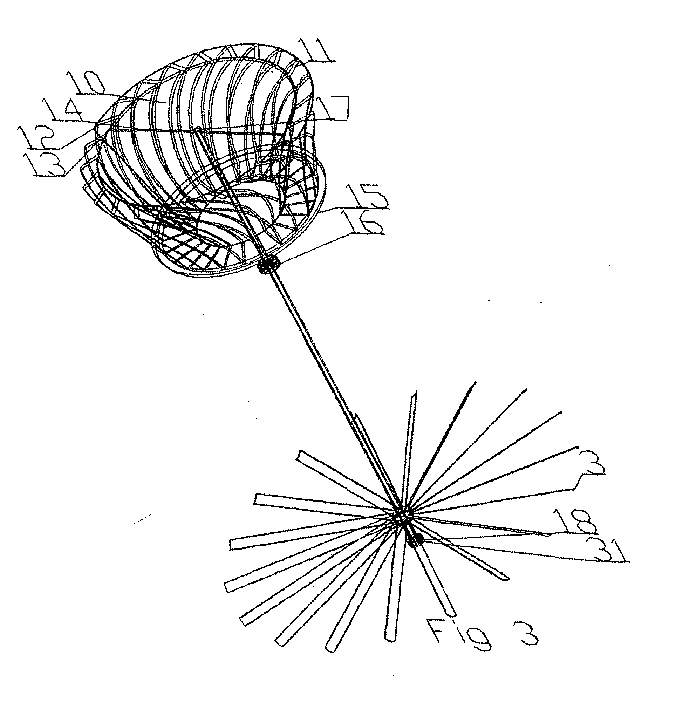

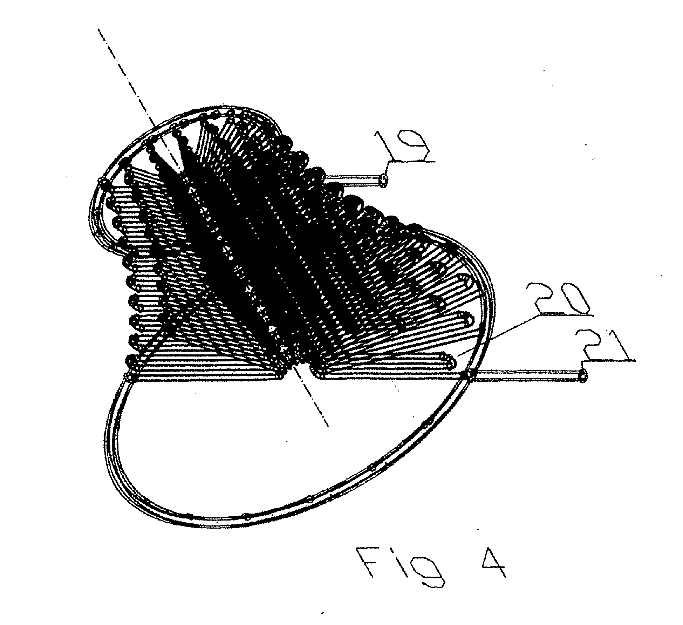

External solar thermal panels provide the energy that transmits the heat to a fluid that passes through the exchangers located inside the shell, and over the axial compressor (3) where the installation has this compressor as shown in Figure 3.
They also warm the compressed water that is used for the nebulizer, where this is incorporated.

These exchangers could be the linear or cross flow type, or others.

As an implementation example they have been arranged in linear flow in crosscurrent; also indicated are the heat collector (19), the coils (20) with or without dissipating fins and the cold collector (21) or the water outlet.

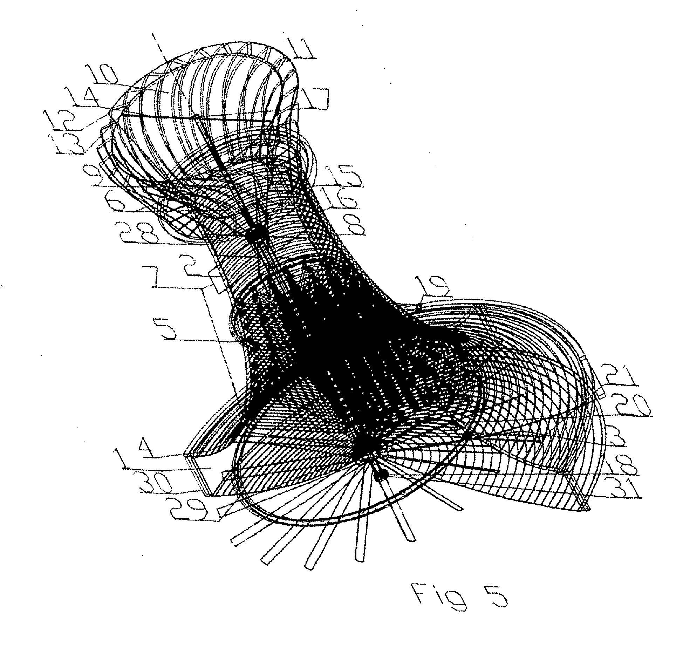

For a better understanding of the invention in Figure 5, the installation of the shell, the turbine, the rotor and the exchangers are shown combined.

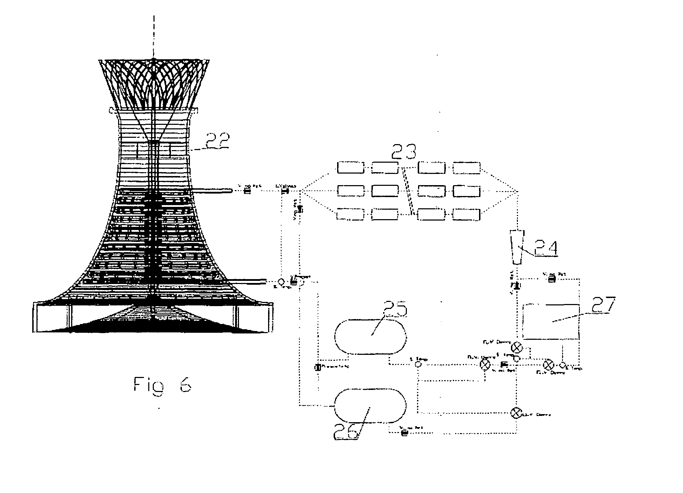

Figure 6 shows a generic operation diagram.

In the same Figure can be seen the complete motor (22), an installation of solar thermal panels (23), the circulation pump (24), the cold return accumulator (25), the excess heat accumulator (26), the start-up and emergency boiler (27) to use if it is required to accelerate the start-up, or to work when both accumulators (25 and 26) do not give the necessary temperature by means of the accumulated hot liquid and/or when the solar panels are not sufficient (23) and, finally, the set of regulation valves, anti-return valves, thermal sensors, electro valves, etc., that would allow a generic operation.

It is not considered necessary to make this description more extensive as any expert in the matter understands the scope of the invention and the advantages derived from it.

The materials used, forms, sizes, number and arrangements of the elements that are described will be susceptible to variation as long as it does not mean an alteration in the essence of the invention.

## Claims

1. Reaction solar turbine **characterised by** the substitution in the reaction motor (22) of the combustion chamber by solar thermal energy, which is carried out by means of the combination of an installation of conventional solar thermal panels connected to heat exchangers housed inside a vertical shell of upwardly decreasing cross-section, thermally insulated from the outside and in which an ascending air flow will be generated which is responsible for the movement of a reaction turbine located in the upper end of the shell.

2. Reaction solar turbine **characterised** according to claim 1, **characterised by** the use of two concentric cone trunks located in the upper end of the flow conduction assembly, of increasing cross-section and decreasing collector, by means of which the flow is increased, and which separates it from the shaft of the motor in order to use this distance to obtain a better motor torque.

3. Reaction solar turbine **characterised** according to claims 1 and 2, **characterised** because the structure of the reaction turbine of the motor, Figure (3) forms a single solid, constituted by enclosures and vanes with rigid unions between all of them, and being the single moving body of the assembly which forms accelerating channels of the fluid in its interior, of increasing cross-section and decreasing collector.

4. Reaction solar turbine **characterised** according to claims 1, 2 and 3 **characterised by** the introduction of nebulized water at high temperature and pressure, Figure 4 (detail 32), over the heat exchangers to obtain a later increase of the density, pressure and speed of the flow that arrives at the motor and consequently to improve its performance.

5. Reaction solar turbine **characterised** according to claims 1, 2, 3 and 4 **characterised** because it can, alternatively, in situations in which the solar thermal energy or that retained in the accumulator was not sufficient to maintain the desired temperature in the primary circuit be complemented by substitution with a conventional boiler, or gas burners, that could be fuelled by methane produced by the organic remainders of rubbish dumps, that guarantee the operation of the assembly in extreme conditions.

6. Reaction solar turbine according to claims 1, 2, 3, 4 and 5 **characterised** because, alternatively, for a better use of the wind in the installation site, accepts in the zone of the nozzle opposed to the local wind direction, and whenever the intensity of such wind makes it advisable, the installation of an orientable and retractable compact screen, which is automatically oriented by sensors maximising the air flow.
